# EUROPEAN PATENT APPLICATION

(11) **EP 1 715 666 A1**
(43) Date of publication of application: **25.10.2006**
(21) Application number: 06005764.3
(22) Date of filing: 21.03.2006
(51) Int. Cl.: H04M 1/725, H04Q 7/32, H04Q 7/30

(54) **Wireless phone with wireless modes for short range and long range communication with a base station**

(30) Priority: 22.04.2005 US 112711; 08.07.2005 US 177869
(71) Applicant: Marvell World Trade Ltd., St. Michael 14027 (BB)
(72) Inventor: Sutardja, Sehat, Los Altos Hills California 94022 (US)
(74) Representative: Grünecker, Kinkeldey, Stockmair & Schwanhäusser Anwaltssozietät

(57) **Abstract**

A wireless phone system (50) comprises a base station (52) and a wireless handset (54) that selectively communicates with the base station using (52) at least one of first and second wireless modes. The second wireless mode has a greater range and higher operating power than the first wireless mode.

## Description

### CROSS-REFERENCE TO RELATED APPLICATIONS

This application is a continuation of U.S. Patent Application 11/112,711, filed on April 22, 2005, which is hereby incorporated by reference in its entirety.

### FIELD OF THE INVENTION

The present invention relates to wireless phone systems, and more particularly to a dual mode wireless phone system.

### BACKGROUND OF THE INVENTION

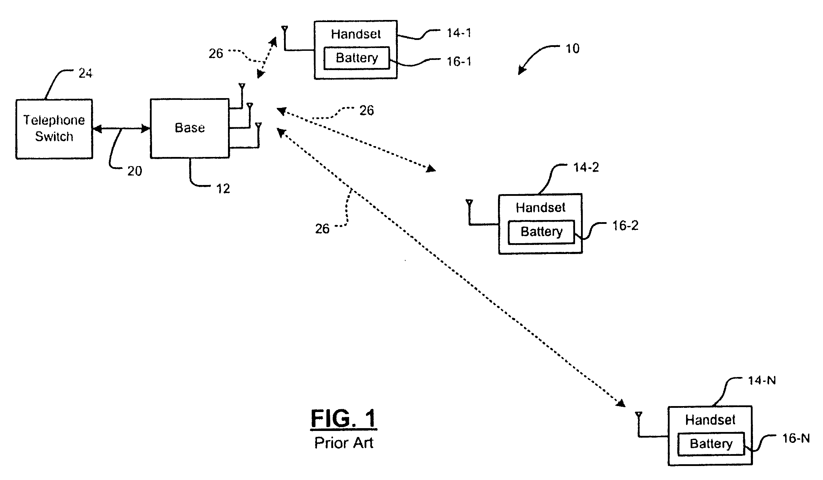

Referring now to FIG. 1, a wireless phone system 10 includes a base station 12 that wirelessly communicates with one or more wireless handsets for 14-1, 14-2, ... and 14-N (collectively wireless handsets 14). Each of the wireless handsets 14 includes a rechargeable battery 16-1, 16-2, ... and 16-N (collectively batteries 16), which provides power during operation. The base station 12 is connected by a telephone line 20 to a telephone switch 24. The base station 12 and wireless handsets 14 typically communicate using a wireless link 26. For example, the wireless link 26 may operate at 900 MHz, 2.4 GHz, 5.8 GHz or other operating frequencies. The base station 12 may independently operate as a wired telephone and/or an answering machine.

A range or operating distance of the wireless handsets 14 can often be an important factor in the purchase of the wireless phone system 10. The range of the wireless handset 14 is the maximum operating distance between the wireless handset 14 and the base station 12. The maximum distance may be impacted by obstructions between the base station and wireless handset such as walls, floors, ceilings and the like. Since the wireless link 26 must be capable of communicating over both short and long distances, transmitters (not shown) in the base station 12 and/or wireless handsets 14 tend to be high power transmitters that have a sufficient transmitting power to support the desired range. The transmitters in the wireless handsets 14 are powered by the battery 16 during use. Use of the high power transmitters tends to reduce the charge on the battery, which requires more frequent recharging. Therefore, a tradeoff must be made between operating range and the operating time between battery recharging.

### SUMMARY OF THE INVENTION

A wireless phone system comprises a base station and a wireless handset that selectively communicates with the base station using at least one of first and second wireless modes. The second wireless mode has a greater range and higher operating power than the first wireless mode.

In other features, the base station comprises a control module that selectively transitions the base station between the first and second wireless modes. The wireless handset comprises a control module that selectively transitions the wireless handset between the first and second wireless modes. The control module selects one of the first and second wireless modes for operation based on wireless signal strength between the base station and the wireless handset.

In still other features, the control module selects one of the first and second wireless modes for operation based on wireless signal strength between the wireless handset and the base station. The control module selects one of the first and second wireless modes for operation based on a data error rate between the base station and the wireless handset. The control module selects one of the first and second wireless modes for operation based on a data error rate between the wireless handset and the base station. The first wireless mode is Bluetooth compliant. The second wireless mode operates at least one of 900 MHz, 2.4 GHz and/or 5.8 GHz. At least one of the first or second wireless modes is complaint with IEEE 802.11, 802.11a, 802.11b, 802.11g, and 802.11n.

In other features, the base station includes a first transceiver that communicates with the control module and that transmits and receives wireless signals using the first wireless mode and a second transceiver that communicates with the control module and that transmits and receives wireless signals using the second wireless mode. The wireless handset includes a first transceiver that communicates with the control module and that transmits and receives wireless signals using the first wireless mode, and a second transceiver that communicates with the control module and that transmits and receives wireless signals using the second wireless mode. The base station includes a transceiver that communicates with the control module and that selectively transmits and receives wireless signals using the first or the second wireless mode. The wireless handset includes a transceiver that communicates with the control module and that selectively transmits and receives wireless signals using the first or second wireless mode.

A wireless phone system comprises base station means for providing an external phone connection and wireless handset means for selectively communicating with the base station using at least one of first and second wireless modes. The second wireless mode has a greater range and higher operating power than the first wireless mode.

In other features, the base station means comprises control means for selectively transitioning the base station means between the first and second wireless modes. The wireless handset means comprises control means for selectively transitioning the wireless handset means between the first and second wireless modes. The control means selects one of the first and second wireless modes for operation based on a wireless signal strength between the base station means and the wireless handset means. The control means selects one of the first and second wireless modes for operation based on a wireless signal strength between the wireless handset means and the base station means.

In other features, the control means selects one of the first and second wireless modes for operation based on a data error rate between the base station means and the wireless handset means. The control means selects one of the first and second wireless modes for operation based on a data error rate between the wireless handset means and the base station means. The first wireless mode is Bluetooth compliant. The second wireless mode operates at least one of 900 MHz, 2.4 GHz and/or 5.8 GHz. At least one of the first or second wireless modes is complaint with IEEE 802.11, 802.11a, 802.11b, 802.11g, and 802.11n.

In other features, the base station means includes first transceiver means for communicating with the control means and for transmitting and receiving wireless signals using the first wireless mode and second transceiver means for communicating with the control means and for transmitting and receiving wireless signals using the second wireless mode.

In other features, the wireless handset means includes first transceiver means for communicating with the control means and for transmitting and receiving wireless signals using the first wireless mode, and second transceiver means for communicating with the control means and for transmitting and receiving wireless signals using the second wireless mode. The base station means includes transceiver means for communicating with the control means and for selectively transmitting and receiving wireless signals using the first or the second wireless mode. The wireless handset means includes transceiver means for communicating with the control means and for selectively transmitting and receiving wireless signals using the first or the second wireless mode.

A method for operating a wireless phone system comprises providing a base station and a wireless handset; selectively communicating with the base station using at least one of first and second wireless modes; and selecting the second wireless mode to have a greater range and higher operating power than the first wireless mode.

In other features, the method includes selectively transitioning the base station between the first and second wireless modes. The method includes selectively transitioning the wireless handset between the first and second wireless modes. The method includes selecting one of the first and second wireless modes for operation based on a wireless signal strength between the base station and the wireless handset. The method includes selecting one of the first and second wireless modes for operation based on a wireless signal strength between the wireless handset and the base station. The method includes selecting one of the first and second wireless modes for operation based on a data error rate between the base station and the wireless handset. The method includes selecting one of the first and second wireless modes for operation based on a data error rate between the wireless handset and the base station.

In other features, the first wireless mode is Bluetooth compliant. The second wireless mode operates at least one of 900 MHz, 2.4 GHz and/or 5.8 GHz. At least one of the first or second wireless modes is complaint with IEEE 802.11, 802.11a, 802.11b, 802.11g, and 802.11n.

A wireless handset for a phone system comprises a wireless transceiver module that transmits and receives first wireless signals in a first wireless mode and second wireless signals a second wireless mode, which has a greater range and higher operating power than the first wireless mode. A control module communicates with the wireless transceiver module and switches the handset between the first and second wireless modes.

In other features, the control module of the wireless handset selectively transitions the wireless handset between the first and second wireless modes. The control module transitions the wireless handset between the first and second wireless modes in response to a wireless mode control signal received by the wireless transceiver module. A system comprises the wireless handset and further comprises a base station comprising a control module that selectively transitions the base station between the first and second wireless modes and that generates the wireless mode control signal. The control module of the handset selects one of the first and second wireless modes for operation based on a wireless signal strength between the base station and the wireless handset.

In other features, the control module of the base station selects one of the first and second wireless modes for operation based on wireless signal strength between the wireless handset and the base station. The control module of the handset selects one of the first and second wireless modes for operation based on a data error rate between the base station and the wireless handset. The control module of the base station selects one of the first and second wireless modes for operation based on a data error rate between the wireless handset and the base station.

In other features, the first wireless mode is Bluetooth compliant. The second wireless mode operates at least one of 900 MHz, 2.4 GHz and/or 5.8 GHz. At least one of the first or second wireless modes is complaint with IEEE 802.11, 802.11a, 802.11b, 802.11g, and 802.11n. The wireless transceiver module includes a first transceiver that communicates with the control module and that transmits and receives wireless signals using the first wireless mode, and a second transceiver that communicates with the control module and that transmits and receives wireless signals using the second wireless mode. The wireless transceiver module includes a transceiver that communicates with the control module and that selectively transmits and receives wireless signals using the first or second wireless mode.

A wireless handset for a phone system comprises wireless transceiver means for transmitting and receiving first wireless signals in a first wireless mode and second wireless signals a second wireless mode, which has a greater range and higher operating power than the first wireless mode. Control means communicates with the wireless transceiver means for switching the handset between the first and second wireless modes.

In other features, the control means of the wireless handset selectively transitions the wireless handset between the first and second wireless modes. The control means transitions the wireless handset between the first and second wireless modes in response to a wireless mode control signal received by the wireless transceiver means. A system comprises the wireless handset and further comprises a base station comprising control means for selectively transitioning the base station between the first and second wireless modes and for generating the wireless mode control signal. The control means of the handset selects one of the first and second wireless modes for operation based on wireless signal strength between the base station and the wireless handset.

In other features, the control means of the base station selects one of the first and second wireless modes for operation based on wireless signal strength between the wireless handset and the base station. The control means of the handset selects one of the first and second wireless modes for operation based on a data error rate between the base station and the wireless handset. The control means of the base station selects one of the first and second wireless modes for operation based on a data error rate between the wireless handset and the base station. The first wireless mode is Bluetooth compliant. The second wireless mode operates at least one of 900 MHz, 2.4 GHz and/or 5.8 GHz. At least one of the first or second wireless modes is complaint with IEEE 802.11, 802.11a, 802.11b, 802.11g, and 802.11n.

In other features, the wireless transceiver means includes first transceiver means that communicates with the control means for transmitting and receiving wireless signals using the first wireless mode, and second transceiver means that communicates with the control means for transmitting and receiving wireless signals using the second wireless mode. The wireless transceiver means includes transceiver means that communicates with the control means for selectively transmitting and receiving wireless signals using the first or second wireless mode.

A method for operating a wireless handset for a phone system comprises selectively transmitting and receiving first wireless signals in a first wireless mode and second wireless signals a second wireless mode, which has a greater range and higher operating power than the first wireless mode; and switching the handset between the first and second wireless modes.

In other features, the method includes selectively transitioning the wireless handset between the first and second wireless modes. The method includes transitioning the wireless handset between the first and second wireless modes in response to a wireless mode control signal received by the wireless transceiver module. The method includes generating the wireless mode control signal using a base station. The method includes selecting one of the first and second wireless modes for operation based on a wireless signal strength between the base station and the wireless handset. The method includes selecting one of the first and second wireless modes for operation based on wireless signal strength between the wireless handset and the base station. The method includes selecting one of the first and second wireless modes for operation based on a data error rate between the base station and the wireless handset. The method includes selecting one of the first and second wireless modes for operation based on a data error rate between the wireless handset and the base station.

In other features, the first wireless mode is Bluetooth compliant. The second wireless mode operates at least one of 900 MHz, 2.4 GHz and/or 5.8 GHz. At least one of the first or second wireless modes is complaint with IEEE 802.11, 802.11a, 802.11b, 802.11g, and 802.11n.

A wireless base station for a phone system comprises a wireless transceiver module that transmits and receives first wireless signals in a first wireless mode and second wireless signals in a second wireless mode, which has a greater range and higher operating power than the first wireless mode. A control module communicates with the wireless transceiver module and that switches the base station between the first and second modes.

In other features, the control module of the wireless base station selectively transitions the wireless base station between the first and second wireless modes. The control module transitions the wireless base station between the first and second wireless modes in response to a wireless mode control signal received by the wireless transceiver module. A system comprises the wireless base station and further comprises a wireless handset comprising a control module that selectively transitions the wireless handset between the first and second wireless modes and that generates the wireless mode control signal. The control module of the wireless base station selects one of the first and second wireless modes for operation based on wireless signal strength between the wireless handset and the base station. The control module of the wireless handset selects one of the first and second wireless modes for operation based on wireless signal strength between the base station and the wireless handset. The control module of the base station selects one of the first and second wireless modes for operation based on a data error rate between the wireless handset and the base station. The control module of the wireless handset selects one of the first and second wireless modes for operation based on a data error rate between the base station and the wireless handset.

In other features, the first wireless mode is Bluetooth compliant. The second wireless mode operates at least one of 900 MHz, 2.4 GHz and/or 5.8 GHz. At least one of the first or second wireless modes is complaint with IEEE 802.11, 802.11a, 802.11b, 802.11g, and 802.11n. The wireless transceiver module includes a first transceiver that communicates with the control module and that transmits and receives wireless signals using the first wireless mode, and a second transceiver that communicates with the control module and that transmits and receives wireless signals using the second wireless mode. The wireless transceiver module includes a transceiver that communicates with the control module and that selectively transmits and receives wireless signals using the first or second wireless mode.

A wireless base station for a phone system comprises wireless transceiver means for transmitting and receiving first wireless signals in a first wireless mode and second wireless signals in a second wireless mode, which has a greater range and higher operating power than the first wireless mode. Control means communicates with the wireless transceiver means for switching the base station between the first and second modes.

In other features, the control means of the wireless base station selectively transitions the wireless base station between the first and second wireless modes. The control means transitions the wireless base station between the first and second wireless modes in response to a wireless mode control signal received by the wireless transceiver means. A system comprises the wireless base station and further comprises a wireless handset comprising control means for selectively transitioning the wireless handset between the first and second wireless modes and for generating the wireless mode control signal.

In other features, the control means of the wireless base station selects one of the first and second wireless modes for operation based on wireless signal strength between the wireless handset and the base station. The control means of the wireless handset selects one of the first and second wireless modes for operation based on wireless signal strength between the base station and the wireless handset. The control means of the base station selects one of the first and second wireless modes for operation based on a data error rate between the wireless handset and the base station. The control means of the wireless handset selects one of the first and second wireless modes for operation based on a data error rate between the base station and the wireless handset.

In other features, the first wireless mode is Bluetooth compliant. The second wireless mode operates at least one of 900 MHz, 2.4 GHz and/or 5.8 GHz. At least one of the first or second wireless modes is complaint with IEEE 802.11, 802.11a, 802.11b, 802.11g, and 802.11n.

In other features, the wireless transceiver means includes first transceiver means that communicates with the control means for transmitting and receiving wireless signals using the first wireless mode and second transceiver means that communicates with the control means for transmitting and receiving wireless signals using the second wireless mode. The wireless transceiver means includes transceiver means that communicates with the control means for selectively transmitting and receiving wireless signals using the first or second wireless mode.

A method of operating a wireless base station for a phone system comprises selectively transmitting and receiving first wireless signals in a first wireless mode and second wireless signals in a second wireless mode, which has a greater range and higher operating power than the first wireless mode; and switching the base station between the first and second modes.

In other features, the method includes transitioning the wireless base station between the first and second wireless modes. The method includes transitioning the wireless base station between the first and second wireless modes in response to a wireless mode control signal received by the wireless transceiver module. The method includes generating the wireless mode control signal using a wireless handset. The method includes selecting one of the first and second wireless modes for operation based on wireless signal strength between the wireless handset and the base station. The method includes selecting one of the first and second wireless modes for operation based on wireless signal strength between the base station and the wireless handset.

In other features, the method includes selecting one of the first and second wireless modes for operation based on a data error rate between the wireless handset and the base station. The method includes selecting one of the first and second wireless modes for operation based on a data error rate between the base station and the wireless handset.

In other features, the first wireless mode is Bluetooth compliant. The second wireless mode operates at least one of 900 MHz, 2.4 GHz and/or 5.8 GHz. At least one of the first or second wireless modes is complaint with IEEE 802.11, 802.11a, 802.11b, 802.11g, and 802.11n.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

FIG. 1 is a functional block diagram of a wireless phone system according to the prior art;

FIG. 2 is a functional block diagram of a wireless phone system according to the present invention;

FIG. 3 is a more detailed functional block diagram of the wireless phone system of FIG. 2 according to one implementation;

FIG. 4 is a more detailed functional block diagram of the wireless phone system of FIG. 2 according to another implementation;

FIG. 5A is a functional block diagram of a base station with master mode control and a handset with slave mode control;

FIG. 5B is a functional block diagram of a base station with master mode control and a handset with slave mode control;

FIG. 5C is a functional block diagram of a base station with mode control and a handset with mode control;

FIGs. 6A and 6B are flowcharts illustrating steps of wireless mode selection based on range; and

FIGs. 7A and 7B are flowcharts illustrating steps of wireless mode selection based on data error rate.

### DETAILED DESCRIPTION OF THE PREFERRED EMBODIMENTS

The following description of the preferred embodiment(s) is merely exemplary in nature and is in no way intended to limit the invention, its application, or uses. For purposes of clarity, the same reference numbers will be used in the drawings to identify similar elements. As used herein, the term module and/or device refers to an application specific integrated circuit (ASIC), an electronic circuit, a processor (shared, dedicated, or group) and memory that execute one or more software or firmware programs, a combinational logic circuit, and/or other suitable components that provide the described functionality.

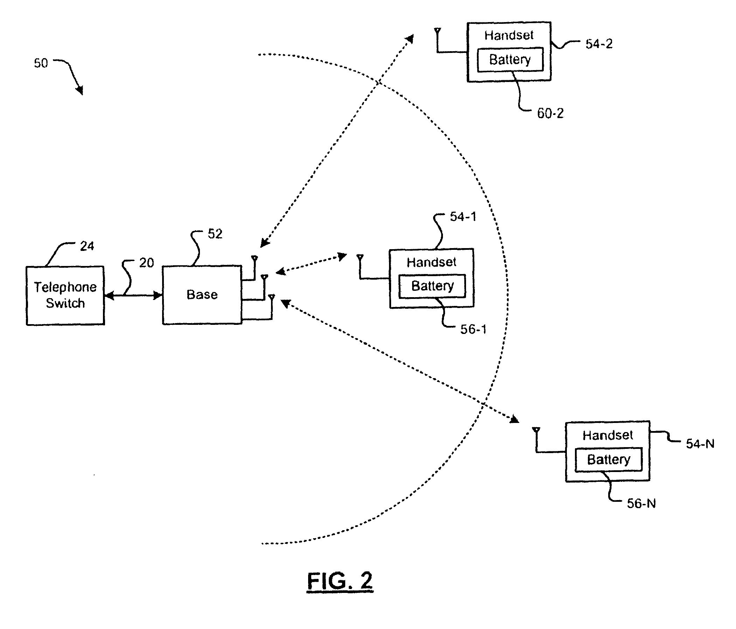

Referring now to FIG. 2, a functional block diagram of a wireless phone system 50 according to the present invention is shown. The wireless phone system 50 includes a base station 52 and one or more wireless handsets for 54-1, 54-2, ... and 54-N (collectively wireless handsets 54). Each of the wireless handsets 54 include a rechargeable battery 56-1, 56-2, ... and 56-N (collectively batteries 56). The base station 52 is connected by the telephone line 20 to the telephone switch 24. The base station 52 and wireless handsets 54 selectively communicate wirelessly using first and/or second wireless links 60 and 62 as will be described below.

In one embodiment, the base station 52 and the wireless handset 54 communicate using the first wireless link when the wireless handsets 54 are located within a predetermined range of the base station 52. The first wireless link is a low power wireless link and the second wireless link is a high power wireless link. The base station 52 and the wireless handset 54 communicate using the second wireless link when the wireless handsets 54 are located outside of a predetermined range of the base station 52. In some implementations, the range is determined based on signal power that is received by the base station 52 and/or wireless handset 54, although other methods may be used. For example, the first wireless link can be a Bluetooth wireless link, which has a range of 30 feet. The second wireless link can be a high power wireless link such as a wireless link operating at 900 MHz, 2.4 GHz, 5.8 GHz and/or other operating frequencies, which have ranges greater than 30 feet.

In another embodiment, the base station 52 and the wireless handset 54 communicate using the first wireless link when a data error rate of the first wireless link between the wireless handsets 54 and the base station 52 is less than a predetermined error rate. The base station 52 and the wireless handset 54 communicate using the second wireless link when the data error rate of the first wireless link between the wireless handsets 54 and the base station 52 is greater than a predetermined error rate

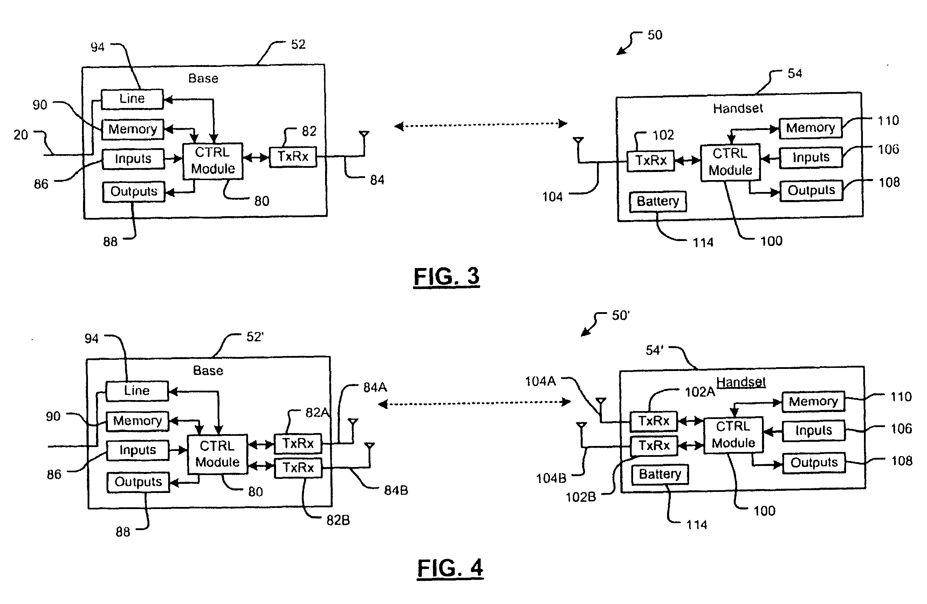

Referring now to FIG. 3, a more detailed functional block diagram of one implementation of the wireless phone system of FIG. 2 is shown. The base station 52 includes a control module 80 that controls operation of the base station 52. The control module 80 communicates with a transceiver 82 and antenna 84, which selectively generates a wireless link with the handset 54 using first and second wireless modes. The control module 80 also communicates with one or more inputs 86 such as a keypad, microphone and/or other inputs either directly or through an input/output interface (not shown). The control module 80 communicates with outputs 88 such as a speaker, display, backlighting, and/or other outputs either directly or through an input/output interface (not shown). The base station 52 includes volatile and/or nonvolatile memory 90 for storing volatile and/or nonvolatile data, respectively. The base station 52 also includes a line connector 94 for connecting the base station 52 to the phone line 20.

The wireless handset 54 includes a control module 100 that controls operation of the wireless handset 54. The control module 100 communicates with a transceiver 102 and antenna 104, which selectively generates a wireless link with the handset 54 using the first and/or second wireless mode. The control module 100 also communicates with one or more inputs 106 such as a keypad, microphone and/or other inputs either directly or through an input/output interface (not shown). The control module 100 communicates with outputs 108 such as a speaker, display, backlighting, and/or other outputs either directly or through an input/output interface (not shown). The wireless handset 54 includes a rechargeable battery 114, which powers components of the handset 54.

In this implementation, the transceivers 84 and 102 are dual mode transceivers that can operate in both first and second wireless modes. When the handset 54 is within a predetermined range of the base station 52, the first wireless mode is used. When the handset 54 is outside of the predetermined range of the base station, the second wireless mode is used. By using the first wireless mode instead of the second, the handset 54 will tend to consume less power during operation and the time between recharging the batteries will tend to increase.

Referring now to FIG. 4, the base station 52' and the wireless handset 54' each include first and second transceivers 82A and 82B and 102A and 1028 with antennas 84A and 84B and 104A and 104B, respectively. The wireless transceivers 82A and 102A implement the first wireless mode and the wireless transceivers 82B and 102B implement the second wireless mode. As can be appreciated, the wireless phone system 50' may include multiple wireless handsets and/or base stations.

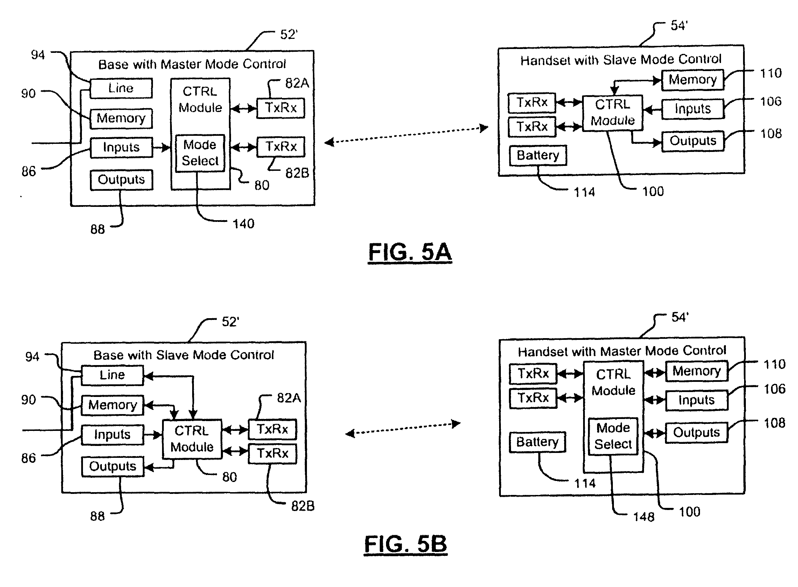

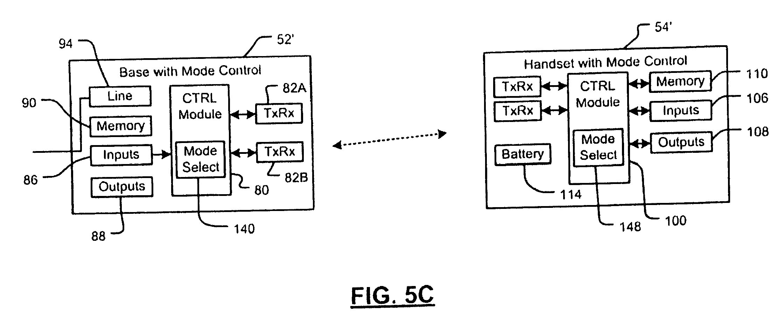

Referring now to FIGs. 5A, 56 and 5C, the base station 52 or the handset 54 or both the base station 52 and the handset 54 may monitor and control the wireless mode. In FIG. 5A, the base station 52 is a master mode controller and the handset 54 is a slave mode controller. In FIG. 5B, the base station 52 is a slave mode controller and the handset 54 is a master mode controller. In FIG. 5C, the base station 52 and the handset 54 are mode controllers. When the mode controller senses that the other device is out of range and/or has a data error rate that is greater than a threshold, the mode controller sends a control signal to the other device to switch to the other mode.

The wireless mode selectors 140 and/or 148 sense a range of the handset 54 from the base station 52 (and/or vice versa) and select a wireless mode of the handset 54 and base station 52. Alternately, the wireless mode selectors 140 and/or 148 senses a data error rate between the wireless handset 54 and the base station 52 and selects the wireless mode based thereon. As can be appreciated, one and/or both of the control modules 80 and/or 100 may include the wireless mode selector 140 and/or 148, respectively. When one or both sense a change in the range, either or both may send a request to transition to the other wireless mode. The wireless mode selectors 140 and/or 148 may be implemented as independent modules from the control modules 80 and/or 100.

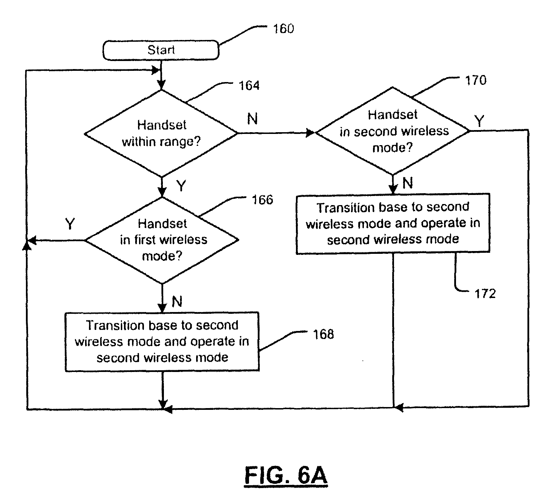

Referring now to FIG. 6A, a flowchart illustrating steps of wireless mode selection by the base station based on range is shown. Control begins with step 160. In step 164, control determines whether the handset is within range. If true, control determines whether the handset is in the first wireless mode in step 166. If true, control returns to step 164. If false, control transitions the handset to the second wireless mode in step 168 by sending a control signal.

If step 164 is false, control determines whether the handset is in the second wireless mode in step 170. If false, control transitions the wireless handset to the second wireless mode in step 172 by sending a control signal and control returns to step 164. If step 170 is false, control returns to step 164.

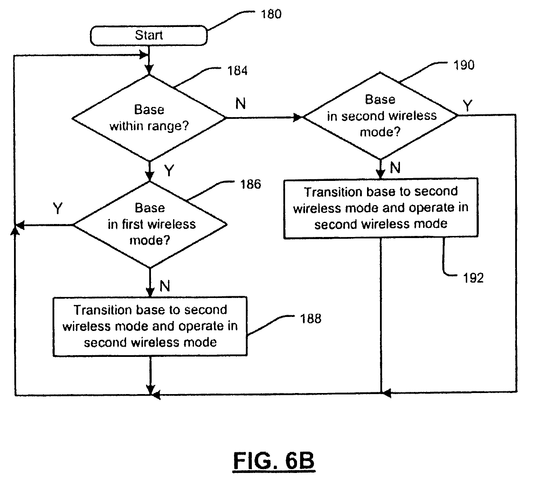

Referring now to FIG. 6B, a flowchart illustrating steps of wireless mode selection by the handset based on range is shown. Control begins with step 180. In step 184, control determines whether the base station is within range. If true, control determines whether the base station is in the first wireless mode in step 186. If true, control returns to step 184. If false, control transitions the base station to the second wireless mode in step 188.

If step 184 is false, control determines whether the base station is in the second wireless mode in step 190. If false, control transitions the base station to the second wireless mode in step 192 and control returns to step 184. If step 190 is false, control returns to step 184.

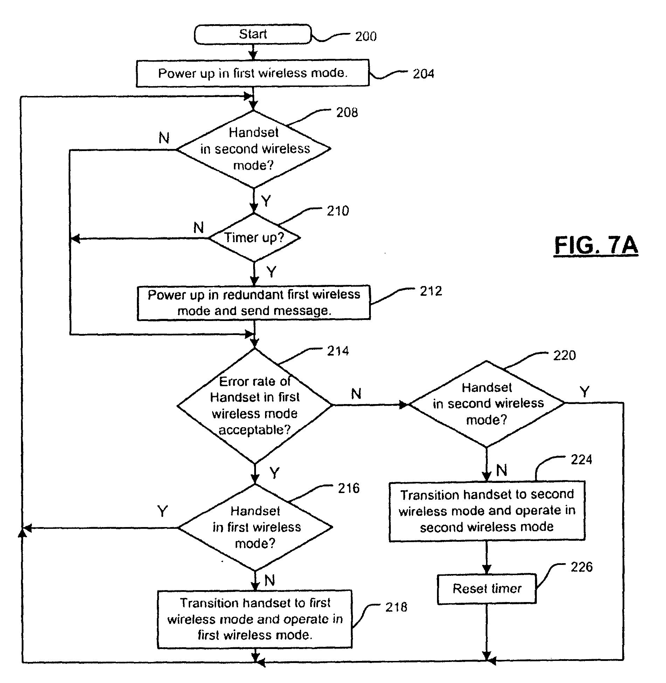

Referring now to FIG. 7A, a flowchart illustrating steps of wireless mode control by the base station based on data error rate is shown. Control begins with step 200. In step 204, control powers up in the first wireless mode. In step 208, control determines whether the handset is in the second wireless mode. If true, control determines whether a timer is up in step 210. If step 210 is true, control powers up in a redundant first wireless mode and sends a test message. In step 214, control determines whether an error rate of the handset in the first mode is acceptable. If step 214 is true, control determines whether the first wireless handset is in the first wireless mode. If no, control transitions to the first wireless mode in step 218.

If step 208 is false, control skips to step 214. If step 210 is false, control skips to step 214. If step 216 is true, control returns to step 204. If step 214 is false, control determines whether the handset is in the second wireless mode in step 220. If true, control returns to step 204. If step 220 is false, control transitions to the second wireless mode in step 224 and resets a timer in step 226.

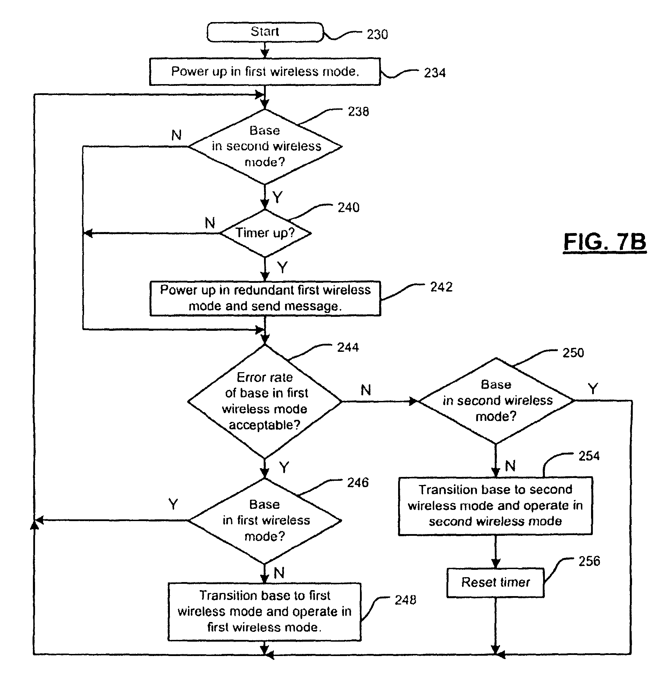

Referring now to FIG. 7B, a flowchart illustrating steps of wireless mode control by the handset based on data error rate is shown. Control begins with step 230. In step 234, control powers up in the first wireless mode. In step 238, control determines whether the base station is in the second wireless mode. If true, control determines whether a timer is up in step 240. If step 240 is true, control powers up in a redundant first wireless mode and sends a test message. In step 244, control determines whether an error rate of the base station in the first mode is acceptable. If step 244 is true, control determines whether the base station is in the first wireless mode. If no, control transitions the base station to the first wireless mode in step 248.

If step 238 is false, control skips to step 244. If step 240 is false, control skips to step 244. If step 246 is true, control returns to step 234. If step 244 is false, control determines whether the base station is in the second wireless mode in step 253. If true, control returns to step 234. If step 253 is false, control transitions the base station to the second wireless mode in step 254 and resets a timer in step 256.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, the specification and the following claims.

## Claims

1. A wireless handset for a phone system, comprising:
a wireless transceiver module that transmits and receives first wireless signals in a first wireless mode and second wireless signals a second wireless mode, which has a greater range and higher operating power than said first wireless mode; and
a control module that communicates with said wireless transceiver module and that switches said handset between said first and second wireless modes.

2. The wireless handset of Claim 1 wherein said control module of said wireless handset selectively transitions said wireless handset between said first and second wireless modes.

3. The wireless handset of Claim 1 wherein said control module transitions said wireless handset between said first and second wireless modes in response to a wireless mode control signal received by said wireless transceiver module.

4. A system comprising the wireless handset of Claim 2 and further comprising a base station comprising a control module that selectively transitions said base station between said first and second wireless modes and that generates said wireless mode control signal.

5. The wireless handset of Claim 2 wherein said control module of said handset selects one of said first and second wireless modes for operation based on a wireless signal strength between said base station and said wireless handset.

6. The system of Claim 4 wherein said control module of said base station selects one of said first and second wireless modes for operation based on wireless signal strength between said wireless handset and said base station.

7. The wireless handset of Claim 2 wherein said control module of said handset selects one of said first and second wireless modes for operation based on a data error rate between said base station and said wireless handset.

8. The system of Claim 4 wherein said control module of said base station selects one of said first and second wireless modes for operation based on a data error rate between said wireless handset and said base station.

9. The wireless handset of Claim 1 wherein said first wireless mode is Bluetooth compliant.

10. The wireless handset of Claim 1 wherein said second wireless mode operates at least one of 900 MHz, 2.4 GHz and/or 5.8 GHz.

11. The wireless handset of Claim 1 wherein at least one of said first or second wireless modes is complaint with IEEE 802.11, 802.11a, 802.11b, 802.11g, and 802.11n.

12. The wireless handset of Claim 1 wherein said wireless transceiver module includes:
a first transceiver that communicates with said control module and that transmits and receives wireless signals using said first wireless mode; and
a second transceiver that communicates with said control module and that transmits and receives wireless signals using said second wireless mode.

13. The wireless handset of Claim 1 wherein said wireless transceiver module includes a transceiver that communicates with said control module and that selectively transmits and receives wireless signals using said first or second wireless mode.
